# EUROPÄISCHE PATENTANMELDUNG

(11) **EP 4 095 629 A1**
(43) Veröffentlichungstag der Anmeldung: **30.11.2022**
(21) Anmeldenummer: 21184487.3
(22) Anmeldetag: 08.07.2021
(51) Int. Cl.: G05B 19/042

(54) **VERFAHREN ZUR PRÜFUNG EINER KONFIGURATION MINDESTENS EINER KOMPONENTE EINER AUTOMATISIERUNGSANLAGE UND AUTOMATISIERUNGSANLAGE**

(30) Priorität: 28.05.2021 DE 102021205483
(71) Anmelder: Siemens Aktiengesellschaft, 80333 München (DE)
(72) Erfinder: Falk, Rainer, 85586 Poing (DE); Feist, Christian Peter, 80689 München (DE); Pfau, Axel, 80333 München (DE); Pyka, Stefan, 85570 Markt Schwaben (DE); Schneider, Daniel, 80796 München (DE); Sperl, Franz, 92526 Oberviechtach (DE)

(57) **Zusammenfassung**

Bei dem Verfahren zur Prüfung einer Konfiguration mindestens einer Komponente einer Automatisierungsanlage werden Konfigurationsdaten der mindestens eine Komponente mittels mindestens einen, von der mindestens eine Komponente verschiedenen, Prüfservers auf eine Zulässigkeit geprüft.

Die Automatisierungsanlage ist zur Ausführung eines solchen Verfahrens ausgebildet und umfasst zumindest eine Komponente mit einem Speicher mit Konfigurationsdaten und mindestens einen, von der mindestens eine Komponente verschiedenen, Prüfserver, bei welcher der mindestens eine Prüfserver zur Prüfung der Konfigurationsdaten ausgebildet ist.

## Beschreibung

Die Erfindung betrifft ein Verfahren zur Prüfung einer Konfiguration mindestens einer Komponente einer Automatisierungsanlage sowie eine Automatisierungsanlage mit mindestens einer Komponente.

Industrieanlagen, insbesondere Automatisierungsanlagen, weisen häufig Komponenten auf, die oft neu konfiguriert werden müssen. Denn häufig ändert sich beispielsweise die Netzwerk-Infrastruktur wegen der Hinzunahme neuer Komponenten oder es werden Komponenten mit geänderten Arbeitsaufgaben in einer Automatisierungsanlage eingesetzt. Dies kann insbesondere bei einer flexiblen Produktion, d.h. beiIndustrie 4.0 der Fall sein. Es wird dort auch als "Plug-and-Produce" bezeichnet. Es können sich in Automatisierungsanlagen weiterhin der Arbeitsablauf und demzufolge die Arbeitsanweisungen für Komponenten ändern, was eine neue Konfiguration der Komponenten erforderlich macht.

Es ist bekannt, bei einer neuen Konfiguration von Komponenten Konfigurationsdaten der neuen Konfiguration ohne Prüfung zu übernehmen. Eine solche Übernahme von Konfigurationsdaten für neue Konfigurationen von Komponenten birgt jedoch ein großes Risiko für Automatisierungsanlagen. Denn fehlerhafte oder durch einen Angreifer manipulierte Konfigurationsdaten auch nur weniger Komponenten können zu einem Fehlverhalten der gesamten Automatisierungsanlage führen, was im Extremfall den Ausfall der gesamten Automatisierungsanlage und/oder die Zerstörung einzelner oder sämtlicher Komponenten der Automatisierungsanlage zu Folge hat. Zudem können auch sensible Daten bei einer fehlerhaften oder durch Angreifer manipulierten Konfiguration von Komponenten abfließen oder gezielt abgeschöpft werden.

Es ist daher Aufgabe der Erfindung, ein verbessertes Verfahren zur Prüfung einer Konfiguration einer Komponente einer Automatisierungsanlage anzugeben, welches insbesondere eine verbesserte Betriebs- und/oder Informationssicherheit, insbesondere hinsichtlich einer Authentizität und Integrität von Daten, der Automatisierungsanlage ermöglicht. Ferner ist es Aufgabe der Erfindung, eine verbesserte Automatisierungsanlage mit mindestes einer Komponente anzugeben, wobei die Anlage insbesondere eine verbesserte Betriebssicherheit und/oder Datensicherheit aufweist.

Diese Aufgabe der Erfindung wird mit einem Verfahren zur Prüfung einer Konfiguration mindestens einer Komponente einer Automatisierungsanlage mit den in Anspruch 1 angegebenen Merkmalen sowie mit einer Automatisierungsanlage mit den in Anspruch 7 angegebenen Merkmalen gelöst. Bevorzugte Weiterbildungen der Erfindung sind in den zugehörigen Unteransprüchen, der nachfolgenden Beschreibungen und der Zeichnung angegeben.

Bei dem erfindungsgemäßen Verfahren zur Prüfung einer Konfiguration mindestens einer Komponente einer Automatisierungsanlage werden Konfigurationsdaten der mindestens eine Komponente mittels mindestens eines, von der mindestens eine Komponente verschiedenen, Prüfservers auf eine Zulässigkeit geprüft.

Mittels des erfindungsgemäß vorgesehenen Prüfservers wird also eine Konfiguration der mindestens eine Komponente nicht derart geprüft, dass die Konfigurationsdaten dieser mindestens eine Komponente lediglich intern innerhalb der mindestens eine Komponente einer Prüfung unterzogen werden, sondern die Prüfung der mindestens einen Komponente erfolgt mittels eines von der mindestens einen Komponente verschiedenen Prüfservers. Bei dem erfindungsgemäßen Verfahren ist folglich die Prüfung der Konfiguration der mindestens einen Komponente nicht allein auf die Prüfung der mindestens einen Komponente selbst beschränkt, sondern der Prüfserver kann als von der mindestens einen Komponente verschiedener Bestandteil der Automatisierungsanlage die Konfigurationsdaten der mindestens einen Komponente derart prüfen, dass der Prüfserver weitere Umstände und Informationen der Automatisierungsanlage, welche nicht innerhalb der mindestens einen Komponente lokalisiert sind, in der Prüfung mit berücksichtigt. Die Konfigurationsdaten können also abhängig von einem Kontext der mindestens eine Komponente, in dem sie eingebettet ist, geprüft werden. Dieser Umstand erlaub es, eine verbesserte Betriebssicherheit und eine verbesserte Datensicherheit der Automatisierungsanlage sicherzustellen.

In einer bevorzugten Weiterbildung des erfindungsgemäßen Verfahrens werden die Konfigurationsdaten abhängig von einem gegenwärtigen Betriebsmodus der Automatisierungsanlage geprüft. In dieser Weiterbildung der Erfindung erfolgt die Prüfung der Konfiguration, der mindestens eine Komponente vorteilhaft nicht isoliert, sondern die Prüfung der Konfiguration, der mindestens eine Komponente berücksichtigt einen gegenwärtigen Betriebsmodus der Automatisierungsanlage. Besonders bevorzugt umfasst in dieser Weiterbildung der Erfindung der Betriebsmodus der Automatisierungsanlage nicht isoliert allein einen Betriebsmodus der mindestens eine Komponente, sondern der Betriebsmodus der Automatisierungsanlage betrifft neben der mindestens eine Komponente zusätzlich eine oder mehrere weitere Komponenten der Automatisierungsanlage. Auf diese Weise kann die Prüfung der Konfiguration, der mindestens einen Komponente Kontextinformationen des Gesamtkontextes der Automatisierungsanlage berücksichtigen. Eine Berücksichtigung eines solchen Gesamtkontextes der Automatisierungsanlage erlaubt es, betriebssicherheitskritische oder datensicherheitskritische Konfigurationen der mindestens eine Komponente in bestimmten Betriebsmodi und, gegebenenfalls verknüpft mit diesen Betriebsmodi, in bestimmten Einsatzzwecken zu erfassen, welche in anderen Betriebsmodi oder Einsatzzwecken hinsichtlich der Betriebssicherheit und der Datensicherheit unproblematisch wären. Die Berücksichtigung des Betriebsmodus der Automatisierungsanlage erlaubt folglich eine umfassendere Prüfung der Konfiguration der mindestens einen Komponente als wenn die erste Komponente lediglich isoliert und ohne jeden Kontext in ihrer Konfiguration geprüft werden würde.

In der vorgenannten Weiterbildung des erfindungsgemäßen Verfahrens können die Konfigurationsdaten abhängig von einem gegenwärtigen Betriebsmodus geprüft werden. In einer hierzu zusätzlich oder alternativ hinzutretenden und ebenfalls vorteilhaften Weiterbildung der Erfindung werden die Konfigurationsdaten abhängig von einem zukünftigen Betriebsmodus der Automatisierungsanlage geprüft. In dieser Weiterbildung der Erfindung kann der zukünftige Betriebsmodus freigegeben oder angestoßen werden. So kann vorzugsweise ein Hochlauf einer Maschine der Automatisierungsanlage oder ein Hochlauf eines durch die Automatisierungsanlage gesteuerten oder überwachten technischen Prozesses, insbesondere die Durchführung eines Fertigungsschritts, abhängig davon freigegeben oder angestoßen werden, ob die Konfigurationsdaten abhängig von dem gegenwärtigen Betriebsmodus der Automatisierungsanlage als zulässig überprüft werden.

In einer bevorzugten Weiterbildung des erfindungsgemäßen Verfahrens ist der Betriebsmodus ein Produktivbetrieb und/oder einen Wartungsbetrieb und/oder einen Testbetrieb der Automatisierungsanlage. Der Betriebsmodus erlaubt in dieser Weiterbildung also vorteilhaft eine Unterscheidung des Betriebsmodus der Automatisierungsanlage in einen Produktivbetrieb und/oder einen Wartungsbetrieb und/oder einen Testbetrieb der Automatisierungsanlage. Eine solche Unterscheidung ermöglicht es, eine Konfiguration der mindestens eine Komponente in einem Testbetrieb mit für die Betriebs- und/oder Informationssicherheit kritischeren Parametern zuzulassen als in einem Produktivbetrieb. Umgekehrt müssen etwa in einem Wartungsbetrieb der Automatisierungsanlage nicht sämtliche Konfigurationen der mindestens eine Komponente zugelassen werden, denn in einem Wartungsbetrieb muss die erste Komponente nicht zur Ausführung sämtlicher Betriebsfunktionen der mindestens eine Komponente befähigt sein. Vielmehr kann die erste Komponente in einer Wartungskonfiguration mit einem verringerten Funktionsumfang verglichen mit dem Produktivbetrieb verbleiben. Alternativ oder zusätzlich können wartungsrelevante Funktionen der mindestens eine Komponente in einem Wartungsbetrieb der Automatisierungsanlage durch die Konfiguration ermöglicht sein, welche im Produktivbetrieb der Automatisierungsanlage nicht erforderlich oder sogar betriebssicherheitskritisch oder datensicherheitskritisch sind.

Vorteilhaft gibt bei dem Verfahren gemäß einer vorteilhaften Weiterbildung der Erfindung der Betriebsmodus einen automatisierten Prozess der Automatisierungsanlage an, insbesondere einen automatisierten Prozess aus einer Menge umfassend mindestens einen ersten Produktionsprozess und einen zweiten, vom ersten verschiedenen, Produktionsprozess. Geeigneterweise ist in dieser Weiterbildung der Erfindung die Automatisierungsanlage eine Fertigungsanlage. In dieser Weiterbildung der Erfindung kann folglich die Konfiguration der mindestens eine Komponente hinsichtlich des automatisierten Prozesses der Automatisierungsanlage, insbesondere abhängig von dem jeweiligen Produktionsprozess der Fertigungsanlage, geprüft werden. In dieser Weiterbildung können daher vorteilhaft Kontextinformationen des automatisierten Prozesses der Automatisierungsanlage zur Prüfung der Konfiguration der mindestens einen Komponente genutzt werden. Insbesondere Produktionsprozesse liefern für die Konfiguration von Komponenten von Automatisierungsanlagen relevante Informationen: So können insbesondere Fertigungsschritte, welche eine bestimmte Temperatur zur Fertigung erfordern, etwa Fügeschritte oder Umformschritte, Temperaturgrenzen einer Heizeinrichtung der mindestens eine Komponente bedingen. In anderen Produktionsprozessen können jedoch andere Temperaturgrenzen sinnvoll sein. In dieser Weiterbildung der Erfindung erlaubt folglich die Berücksichtigung des automatisierten Prozesses der Automatisierungsanlage die Berücksichtigung einer prozessbedingten Kontextinformation, die zur Prüfung der Konfiguration der mindestens einen Komponente herangezogen werden kann.

Besonders bevorzugt unterscheiden sich der erste und der zweite Produktionsprozess voneinander in einem Produkt des ersten und des zweiten Produktionsprozesses und vorzugsweise in produktbedingten Parametern des ersten und des zweiten Produktionsprozesses. Insbesondere bei der Produktion von Produkten kann die Information über das zu fertigende Produkt eine relevante Kontextinformation für eine Konfiguration der mindestens einen Komponente der Automatisierungsanlage darstellen. So können beispielsweise für unterschiedliche Produkte unterschiedliche Toleranzen in der Bemaßung von Bestandteilen des Produktes zulässig sein, was unterschiedliche Konfigurationen der mindestens eine Komponente der Automatisierungsanlage bedingt. Auch können unterschiedliche Produkte jeweils bei unterschiedlichen Temperaturen gefertigt werden, sodass unterschiedliche Temperaturspannen oder Temperaturintervalle für die mindestens eine Komponente abhängig von dem zu fertigenden Produkt bestehen. Solche Informationen lassen sich in dieser Weiterbildung des erfindungsgemäßen Verfahrens vorteilhaft berücksichtigen.

Vorzugsweise erfolgt bei dem erfindungsgemäßen Verfahren die Prüfung der Konfiguration zusätzlich abhängig von einer IT-Infrastruktur der Automatisierungsanlage und/oder einer Information über die mindestens eine Komponente der Automatisierungsanlage und/oder einem Ergebnis einer Plausibilitätsprüfung der Konfigurationsdaten der mindestens einen Komponente und/oder einer Positivliste (White List) für zulässige Konfigurationsdaten der mindestens einen Komponente und/oder einer Negativliste (Black List) für unzulässige Konfigurationsdaten der mindestens einen Komponente und/oder mindestens einer kryptografischen Signatur. In dieser Weiterbildung der Erfindung können folglich weitere Kontextinformationen der Automatisierungsanlage für die Prüfung der Konfiguration der mindestens eine Komponente der Automatisierungsanlage herangezogen und berücksichtigt werden.

Die erfindungsgemäße Automatisierungsanlage ist zur Ausführung eines erfindungsgemäßen Verfahrens wie vorhergehend beschrieben ausgebildet. Die erfindungsgemäße Automatisierungsanlage umfasst mindestens eine Komponente mit einem Speicher mit Konfigurationsdaten und einen, von der mindestens eine Komponente verschiedenen, Prüfserver, mittels welchem die Konfigurationsdaten der mindestens eine Komponente prüfbar sind. Besonders bevorzugt ist bei der erfindungsgemäßen Automatisierungsanlage der Prüfserver zur Prüfung der Konfigurationsdaten ausgebildet. Bei der erfindungsgemäßen Automatisierungsanlage kann der Prüfserver folglich die Konfigurationsdaten der mindestens eine Komponente prüfen oder der Prüfserver kann Kriterien bereitstellen, mittels welchen die Konfigurationsdaten der mindestens eine Komponente prüfbar sind, insbesondere durch die Komponente selbst. Mittels der erfindungsgemäßen Automatisierungsanlage ist folglich die Konfiguration der mindestens eine Komponente mittels des von der mindestens eine Komponente verschiedenen Prüfservers prüfbar. Mittels des erfindungsgemäß vorgesehen Prüfservers können folglich Kontextinformationen der Automatisierungsanlage leicht bei der Prüfung der Konfiguration der mindestens einen Komponente berücksichtigt werden. Es bestehen bei der erfindungsgemäßen Automatisierungsanlage dieselben Vorteile wie bereits im Zusammenhang mit dem erfindungsgemäßen Verfahren zuvor erläutert.

In einer vorteilhaften Weiterbildung der erfindungsgemäßen Automatisierungsanlage weist diese zur Erfassung mindestens eines Betriebsmodus der Automatisierungsanlage eingerichtete Erfassungsmittel auf, welche mit dem Prüfserver signalverbunden sind. Mittels der vorgesehenen Erfassungsmittel kann der Prüfserver folglich mindesten einen Betriebsmodus der Automatisierungsanlage erfassen und bei der Prüfung der Konfiguration der mindestens einen mindestens einen Komponente berücksichtigen.

Besonders bevorzugt ist bei der erfindungsgemäßen Automatisierungsanlage der Prüfserver zur Prüfung der mindestens eine Komponente unter Heranziehung von Signalen der Erfassungsmittel ausgebildet und eingerichtet. Auf diese Weise ist folglich eine Berücksichtigung des Betriebsmodus der Automatisierungsanlage bei der Prüfung der Konfiguration der mindestens eine Komponente leicht möglich.

In einer bevorzugten Weiterbildung der erfindungsgemäßen Automatisierungsanlage ist der Prüfserver als Softwaremodul ausgebildet. In dieser Weiterbildung der Erfindung ist es folglich nicht erforderlich, dass erste Komponente und Prüfserver gewissermaßen physikalisch und räumlich voneinander getrennt sind. Der Prüfserver und die erste Komponente können als voneinander getrennte Softwaremodule realisiert sein, wobei die Erfassungsmittel insbesondere als Schnittstelle zur Datenerfassung ausgebildet sind.

In einer alternativen und ebenfalls vorteilhaften Weiterbildung der erfindungsgemäßen Automatisierungsanlage ist der Prüfserver als separates Gerät ausgebildet, welches mit der mindestens eine Komponente der Automatisierungsanlage nicht identisch, d. h. von der mindestens eine Komponente verschieden, ist.

Geeigneterweise weist die Automatisierungsanlage gemäß der Erfindung zusätzlich zur mindestens eine Komponente mindestens eine zweite oder mehrere weitere Komponenten mit je einem Speicher mit Konfigurationsdaten auf, wobei bei der Automatisierungsanlage der Prüfserver zur Prüfung der Konfigurationsdaten der weiteren Komponente oder Komponenten ausgebildet ist. In dieser Weiterbildung der Erfindung kann folglich der Prüfserver die Prüfung der Konfigurationsdaten von jeder der Komponenten durchführen. In dieser Weiterbildung der Erfindung können die weiteren Komponenten bei der Prüfung der Konfigurationsdaten der mindestens eine Komponente berücksichtigt werden. Genau so können Informationen bei der Prüfung der zweiten oder der mehreren zusätzlichen Komponenten der Automatisierungsanlage herangezogen werden, um die Prüfung der Konfigurationsdaten der mindestens einen Komponente durchzuführen. Umgekehrt können auch Informationen der mindestens eine Komponente zur Prüfung von Konfigurationsdaten der zweiten oder der mehreren zusätzlichen Komponenten herangezogen werden. In diesem Falle lassen sich folglich die weiteren Komponenten als Quelle für zusätzliche Kontextinformationen bei der Prüfung der Konfigurationsdaten heranziehen.

Geeigneterweise ist die erfindungsgemäße Automatisierungsanlage eine Fertigungsanlage.

Nachfolgend wird die Erfindung anhand eines in der Zeichnung angegebenen Ausführungsbeispiels näher erläutert. Es zeigen:
- Fig. 1: ein erstes Ausführungsbeispiel einer erfindungsgemäßen Fertigungsanlage mit drei Fertigungskomponenten und einem Prüfserver zur Ausführung des erfindungsgemäßen Verfahrens zur Prüfung einer Konfiguration schematisch in einer Prinzipskizze sowie
- Fig. 2: ein weiteres Ausführungsbeispiel einer erfindungsgemäßen Fertigungsanlage mit drei Fertigungskomponenten und einem Prüfserver zur Ausführung eines weiteren Ausführungsbeispiels des erfindungsgemäßen Verfahrens zur Prüfung der Konfiguration schematisch in einer Prinzipskizze.

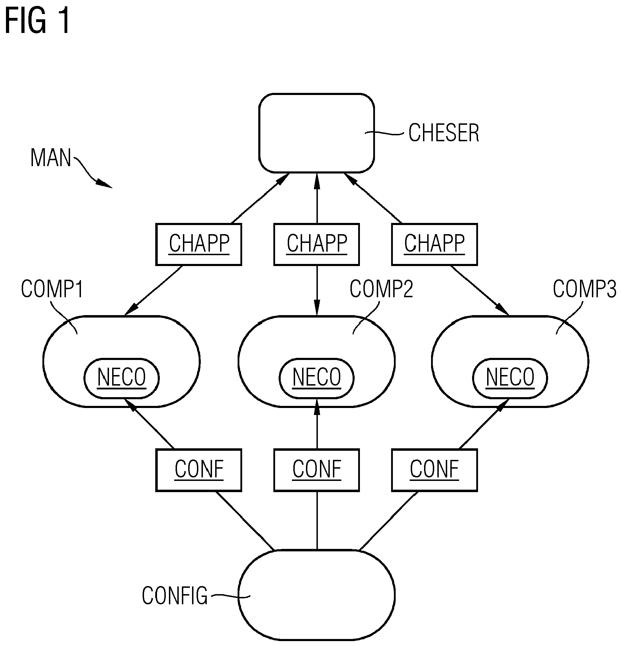

Die in Fig. 1 dargestellte erfindungsgemäße Anlage ist eine automatisierte Fertigungsanlange MAN und kann alternativ auch als Automatisierungsanlage bezeichnet werden, die zur Fertigung eines Produkts ausgebildet ist.

Im dargestellten Ausführungsbeispiel dient die Fertigungsanlage MAN zur Fertigung eines Produkts in Gestalt eines Steuergeräts mit maßgeschneiderter Geometrie. Dazu wird mit einer ersten Komponente COMP1 eine Leiterplatte mit einer verwinkelten Geometrie bestückt. Die Leiterplatten weisen eine Gestalt auf, die aus nicht zueinander fluchtend oder koplanar angeordneten Flachteilen besteht, sondern die Gestalt ist aus in 45-Grad-Winkeln ihrer Flachseiten zueinander angeordneten Flachteilen aufgebaut. Mittels einer zweiten Komponente COMP2 wird die bestückte Leiterplatte mit einem Gehäuseteil thermisch verbunden, im dargestellten Ausführungsbeispiel heißgeklebt. Mittels einer dritten Komponente COMP3 wird das Gehäuseteil mit weiteren Gehäuseteilen zu einem mit der Leiterplatte versehenen Gehäuse verbunden.

Bei der Fertigungsanlage MAN werden die drei Komponenten COMP1, COMP2, COMP3 mittels eines Konfigurators CONFIG konfiguriert. Der Konfigurator CONFIG ist ein nicht zur Fertigungsanlage MAN gehöriges Softwarewerkzeug, welches zur Konfiguration der Komponenten COMP1, COMP2, COMP3 eingerichtet ist. Dazu lädt der Konfigurator CONFIG Konfigurationsdaten NECO in einem Konfigurationsschritt CONF in die Komponenten COMP1, COMP2, COMP3 ein. Alternativ kann der Konfigurator CONFIG auch ein separates Gerät oder ein Nutzer sein, der manuell Konfigurationsdaten NECO mittels eines Konfigurationsschritts CONF in die Komponenten COMP1, COMP2, COMP3 einlädt. D. h. der Konfigurator CONFIG überträgt Konfigurationsdaten NECO an die Komponenten COMP1, COMP2, COMP3. Die Komponenten COMP1, COMP2, COMP3 halten die Konfigurationsdaten NECO zunächst in einem vorläufigen Evaluationsspeicher, der der Prüfung der Konfigurationsdaten NECO dient und von welchem die Konfigurationsdaten nach erfolgter Prüfung in einen Konfigurationsdatenspeicher der Komponenten COMP1, COMP2, COMP3 gelangen, in welchen sie zur Konfiguration der Komponenten COMP1, COMP2, COMP3 dienen. Die Konfiguration der Komponenten COMP1, COMP2, COMP3 erfolgt beispielsweise bei der erstmaligen Einrichtung der Fertigungsanlage MAN oder aber bei einer Änderung eines Produktionsablaufs der Fertigungsanlage. Der Produktionsablauf wird insbesondere dann geändert, wenn ein neues, maßgeschneidertes Produkt mit der Fertigungsanlage MAN gefertigt wird, da dann auch die Komponenten COMP1, COMP2, COMP3 regelmäßig hinsichtlich ihrer Arbeitsaufgaben angepasst werden und demzufolge für die angepassten Arbeitsaufgaben neue Konfigurationsdaten NECO erfordern.

Zudem ist regelmäßig eine neue Konfiguration der Komponenten COMP1, COMP2, COMP3 erforderlich, wenn die Fertigungsanlage MAN vom Produktivzustand in einen Wartungszustand versetzt wird, da die Komponenten COMP1, COMP2, COMP3 im Wartungszustand zum einen eine zusätzliche Selbsttestfunktionalität aufweisen, mit denen eine Zustandsdiagnose der Komponenten COMP1, COMP2, COMP3 möglich ist. Zudem sind bei den Komponenten COMP1, COMP2, COMP3 Produktivfunktionen gesperrt, da im Wartungszustand eine Fertigung eines Produkts nicht beabsichtigt ist und etwa eine Bestückung ohne zuvor an die erste Komponente COMP1 übergebene Leiterplatte zu einer Fehlfunktion bis hin zur Zerstörung der ersten Komponente COMP1 führt.

Ferner weist die Fertigungsanlage MAN zudem einen Testzustand auf, in welchem verschiedene Funktionen der einzelnen Komponenten COMP1, COMP2, COMP3 getestet werden. Im Testzustand werden die Komponenten COMP1, COMP2, COMP3 mit zusätzlichen Funktionalitäten zu Testzwecken versehen, die im Produktivzustand der Fertigungsanlage MAN nicht oder zumindest nicht sämtlich benötigt werden.

Die Komponenten COMP1, COMP2, COMP3 werden bei der Fertigungsanlage MAN mittels des Konfigurators CONFIG konfiguriert. Die Fertigungsanlage MAN weist zusätzlich einen Prüfserver CHESER auf, der die Konfiguration der Komponenten COMP1, COMP2, COMP3 prüft. Dazu ist der Prüfserver CHESER mit jeder der Komponenten COMP1, COMP2, COMP3 signalverbunden und steht in Kommunikation mit den Komponenten COMP1, COMP2, COMP3. Der Prüfserver CHESER verfügt über einen Lesezugriff auf die neu eingegangenen Konfigurationsdaten NECO im Evaluationsdatenspeicher der Komponenten COMP1, COMP2, COMP3.

Dazu prüft der Prüfserver CHESER, ob die Konfigurationsdaten NECO, die die Komponenten COMP1, COMP2, COMP3 vom Konfigurator CONFIG erhalten, zulässig sind. Der Prüfserver CHESER ist dazu mit einer Steuerung (nicht explizit in der Zeichnung dargestellt) der Fertigungsanlage MAN signalverbunden. Der Prüfserver CHESER erhält von der Steuerung die Information, in welchem Betriebsmodus sich die Anlage befindet. Der Betriebsmodus der Fertigungsanlage MAN kann der Produktivzustand, der Wartungszustand oder der Testzustand sein. Der Prüfserver CHESER prüft nun die Konfigurationsdaten NECO der Komponenten COMP1, COMP2, COMP3 des Konfigurators abhängig von diesem Betriebsmodus der Fertigungsanlage MAN.

Die Komponenten COMP1, COMP2, COMP3 übernehmen die Konfigurationsdaten NECO nur dann endgültig zur Konfiguration, wenn der Prüfserver CHESER die Konfigurationsdaten NECO als zulässig bestätigt. Diese Prüfung wird bei jeder neuen Konfiguration der Komponenten COMP1, COMP2, COMP3 unternommen.

Zusätzlich unterzieht der Prüfserver CHESER die Konfigurationsdaten NECO der Komponenten COMP1, COMP2, COMP3 einer Prüfung CHAPP anhand von Kontextinformationen bezüglich des jeweiligen Produkts, welches die Fertigungsanlage MAN gegenwärtig fertigt. So erfordert ein Produkt in Gestalt eines Steuergeräts mit maßgeschneiderter Geometrie wie oben beschrieben andere Konfigurationsdaten NECO als ein anderes Produkt. Denn die verwinkelte Geometrie der Leiterplatte erfordert einen größeren Aufnahmeraum für die Aufnahme der Leiterplatte durch die zweite Komponente COMP2 zur Verbindung mit einem Gehäuseteil als eine Leiterplatte mit einer einfachen planaren Gestalt. Folglich muss die zweite Komponente COMP2 mit Konfigurationsdaten NECO eingerichtet sein, die einen solchen größeren Aufnahmeraum in der Konfiguration vorsehen. Der Prüfserver CHESER kann die für die Prüfung des Aufnahmeraums erforderlichen geometrischen Daten etwa den räumlichen Anweisungen zur Bestückung der Leiterplatte der ersten Komponente COMP1 entnehmen und insoweit als Kontext für die Prüfung CHAPP der Konfiguration der Komponente COMP2 heranziehen.

Ferner darf das Heißkleben der Leiterplatte an den Gehäuseteil keinen derart großen Temperatureintrag in die Leiterplatte bedingen, dass elektronische Bauteile, mit welchen die erste Komponente COMP1 die Leiterplatte bestückt, infolge des Temperatureintrages in ihrer Funktion beeinträchtig oder zerstört werden. Folglich legen die Temperaturanforderungen der Bauteile der Leiterplatte eine Temperaturspanne fest, mit welcher das Heißkleben der Leiterplatte an den Gehäuseteil mittels der zweiten Komponente COMP2 erfolgen darf. Die zulässige Temperaturspanne der zweiten Komponente COMP2 wird dabei von dem Prüfserver CHESER von den Bestückungsanweisungen der ersten Komponente abgeleitet und zur Prüfung CHAPP der Konfigurationsdaten NECO der zweiten Komponente COMP2 herangezogen.

Zusätzlich umfasst der Prüfserver CHESER für jede der Komponenten COMP1, COMP2, COMP3 einen Speicher mit einer Liste in Form einer Whitelist für zulässige Konfigurationsdaten, die zusätzlich mit den Konfigurationsdaten NECO der Komponenten COMP1, COMP2, COMP3 verglichen wird. Nur wenn die Konfigurationsdaten NECO der Komponenten COMP1, COMP2, COMP3 auch in der Whitelist enthalten sind, werden die Konfigurationsdaten NECO vom Prüfserver CHESER als zulässig beurteilt. Dabei können in weiteren, nicht eigens dargestellten Ausführungsbeispielen die Konfigurationsdaten NECO auch mit Hashwerten von in einer Whitelist enthaltenen Konfigurationsdaten NECO verglichen werden anstelle eines direkten Vergleichs mit der Whitelist. In weiteren, nicht eigens gezeigten Ausführungsbeispielen kann der Prüfserver CHESER einen Speicher mit einer Blacklist von Konfigurationsdaten aufweisen, mit welchen die Konfigurationsdaten NECO der Komponenten COMP1, COMP2, COMP3 verglichen werden. Tauchen die Konfigurationsdaten NECO auf der Blacklist auf, so werden die Konfigurationsdaten NECO nicht als zulässig beurteilt.

Der Prüfserver CHESER ist im dargestellten Ausführungsbeispiel ein eigenständiges Gerät in Gestalt eines Computers, der ausschließlich für die Prüfung CHAPP von Konfigurationsdaten NECO in die Fertigungsanlage MAN eingebracht wird. Der Prüfserver CHESER kann in weiteren, nicht eigens dargestellten Ausführungsbeispielen als Softwaremodul ein Bestandteil eines in der Fertigungsanlage MAN integrierten weiteren Systems implementiert sein, beispielsweise als Bestandteil eines MES (engl. = "Manufacturing Execution System") oder eines SCADA-Systems sein.

Die Kommunikation der Komponenten COMP1, COMP2, COMP3 mit dem Prüfserver CHESER ist im dargestellten Ausführungsbeispiel kryptographisch geschützt, beispielsweise mittels eines Sicherheitsprotokolls in Form von TLS oder IPsec/IKEv2, oder die übertragenen Nachrichten sind über S/MIME, XML-Schutz (XML Integrity, XML Encryption) oder JSON-Schutz (JSON Web Encryption, JSON Web Signature) kryptographisch geschützt.

Im in Fig. 1 dargestellten Ausführungsbeispiel treffen die Komponenten COMP1, COMP2, COMP3 nicht selbst Entscheidung über zulässige Änderungen von Konfigurationen, sondern die Konfiguration wird jeweils nur dann übernommen, wenn die Konfiguration vom Prüfserver CHESER als zulässig eingestuft, d. h. genehmigt, ist.

Der Prüfserver CHESER bezieht in weiteren, nicht eigens dargestellten Ausführungsbeispielen folgende weitere Kriterien in seine Prüfung CHAPP zur Zulässigkeit der Konfigurationsdaten NECO mit ein: Informationen über die jeweiligen Komponenten COMP1, COMP2, COMP3 selbst und/oder Kenntnisse über die IT-Infrastruktur der Fertigungsanlage MAN und/oder Kenntnisse über zulässige Projektierungen der Fertigungsanlage MAN und/oder freigegebene Versionsstände einer auf den Komponenten COMP1, COMP2, COMP3 installierten Software.

Der Prüfserver CHESER kann unabhängig von den detaillierten inhaltlichen Prüfungen oder Plausibilitätsprüfungen der zulässigen Konfigurationsdaten NECO zusätzlich konkrete Bedingungen an die Integrität und Authentizität der Konfigurationsdaten NECO stellen und prüfen. Hierzu gehören beispielsweise die Prüfung eines kryptographischen MAC-Wertes oder einer Signatur der Konfigurationsdaten NECO oder des Konfigurators CONFIG: Nur wenn der MAC-Wert oder die Signatur des Konfigurators CONFIG gültig ist, wird die Konfiguration entweder akzeptiert oder für eine inhaltliche Prüfung CHAPP der Konfigurationsdaten NECO zugelassen. Dabei kann auch derart vorgegangen werden, dass, je nachdem von welcher Stelle eine Signatur erstellt wurde, bestimmte Konfigurationen erlaubt oder verboten sind.

Die Reaktion des Prüfservers CHESER auf fehlerhafte Konfigurationsdaten NECO einschließlich Fehler bei der Authentizitätsprüfung der Konfigurationsdaten NECO erfolgt im dargestellten Ausführungsbeispiel mittels einer Information einer unterbleibenden Freigabe der Konfigurationsdaten NECO durch den Prüfserver CHESER. Die Komponenten COMP1, COMP2, COMP3 sind danach nicht zur Übernahme der Konfigurationsdaten NECO berechtigt.

Alternativ oder zusätzlich kann die Prüfung CHAPP der Konfigurationsdaten NECO mittels des Prüfservers CHESER auch derart erfolgen, dass der Prüfserver CHESER den Komponenten COMP1, COMP2, COMP3 eine detailliertere Auskunft über das Prüfergebnis übermittelt, beispielsweise welche Teile der Konfigurationsdaten NECO korrekt sind und welche fehlerhaft oder unzulässig sind oder wie stark die Konfigurationsdaten NECO von vollständig zulässigen Konfigurationsdaten NECO abweichen. In einem weiteren Ausführungsbeispiel informiert der Prüfserver CHESER weitere Systeme/Komponenten, die dann entsprechend auf das Prüfergebnis reagieren können.

Abhängig von der Prüfung CHAPP des Prüfservers CHESER können sich die Komponenten COMP1, COMP2, COMP3 unterschiedlich verhalten: Im einfachsten Fall wird das Starten der Komponente COMP1, COMP2, COMP3 erlaubt, wenn die Konfigurationsdaten NECO infolge der Prüfung CHAPP durch den Prüfserver CHESER als zulässig gelten oder das Starten der Komponenten COMP1, COMP2, COMP3 wird verhindert, wenn die Konfigurationsdaten NECO vom Prüfserver CHESER als nicht zulässig beurteilt werden.

Anhand des Ergebnisses der Prüfung CHAPP des Prüfservers CHESER können die Komponenten COMP1, COMP2, COMP3 auch bestimmte Funktionalitäten der jeweiligen Komponenten COMP1, COMP2, COMP3 freischalten oder verbieten, insbesondere anhand eines feingranularen Ergebnisses können die Komponenten COMP1, COMP2, COMP3 auch detaillierter bestimmte Funktionalitäten der Komponenten COMP1, COMP2, COMP3 erlauben oder verbieten.

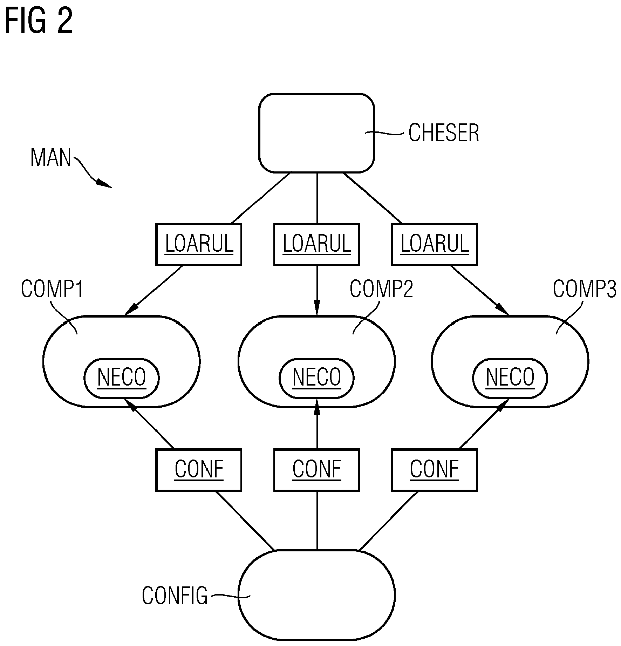

In einem weiteren, in Fig. 2 dargestellten, Ausführungsbeispiel, welches im Übrigen dem ersten Ausführungsbeispiel entspricht, wird die Prüfung CHAPP zwar mittels des Prüfservers CHESER durchgeführt, nicht aber durch diesen selbst. In diesem Ausführungsbeispiel legt der Prüfserver CHESER vielmehr die Prüfkriterien fest und übermittelt diese Prüfkriterien den Komponenten COMP1, COMP2, COMP3 für die Prüfung, in dem der Prüfserver die Prüfkriterien in die Komponenten COMP1, COMP2, COMP3 mittels eines Ladeprozesses LOARUL einlädt und führt die Prüfung aber nicht selbst durch. Die Reaktionen der Komponenten COMP1, COMP2, COMP3 auf das Prüfergebnis sind analog derjenigen zur ersten Variante.

In einem weiteren, nicht eigens dargestellten Ausführungsbeispiel unterscheiden die Komponenten COMP1, COMP2, COMP3 zwischen einfachen Konfigurationsdaten NECO, die lokal auf der Komponente COMP1, COMP2, COMP3 geprüft werden können, etwa eine Konfiguration der eigenen Hardware. Konfigurationsdaten NECO hingegen, welche kritisch für die Betriebssicherheit der Fertigungsanlage MAN sind, werden hingegen von den Komponenten COMP1, COMP2, COMP3 jeweils an den Prüfserver CHESER weitergereicht und die Prüfung erfolgt durch den Prüfserver CHESER.

## Patentansprüche

1. Verfahren zur Prüfung (CHAPP) einer Konfiguration mindestens einer Komponente (COMP1, COMP2, COMP3) einer Automatisierungsanlage (MAN), bei welchem
- Konfigurationsdaten (NECO) der mindestens eine Komponente (COMP1, COMP2, COMP3) mittels eines, von der mindestens eine Komponente (COMP1, COMP2, COMP3) verschiedenen, Prüfservers (CHESER) auf eine Zulässigkeit geprüft werden.

2. Verfahren nach Anspruch 1, bei welchem die Konfigurationsdaten (NECO) in Abhängigkeit von einem gegenwärtigen Betriebsmodus der Automatisierungsanlage (MAN) geprüft werden.

3. Verfahren nach einem der vorhergehenden Ansprüche, bei welchem der Betriebsmodus ein Produktivbetrieb und/oder ein Wartungsbetrieb und/oder ein Testbetrieb ist.

4. Verfahren nach einem der vorhergehenden Ansprüche, bei welchem der Betriebsmodus einen automatisierten Prozess der Automatisierungsanlage (MAN) angibt, insbesondere einen Prozess aus einer Menge eines ersten Produktionsprozesses oder eines zweiten, vom ersten verschiedenen, Produktionsprozess.

5. Verfahren nach einem der vorhergehenden Ansprüche, bei welchem mindestens der erste und der zweite Produktionsprozess sich voneinander in einem Produkt von erstem und zweitem Produktionsprozesse und vorzugsweise zudem in produktbedingten Parametern des ersten und zweiten Produktionsprozesses unterscheiden.

6. Verfahren nach einem der vorhergehenden Ansprüche, bei welchem die Prüfung (CHAPP) der Konfiguration zusätzlich abhängig von
- einer IT-Infrastruktur der Automatisierungsanlage (MAN) und/oder
- einer Information über die mindestens eine Komponente (COMP1, COMP2, COMP3) der Automatisierungsanlage (MAN) und/oder
- einem Ergebnis einer Plausibilitätsprüfung der Konfigurationsdaten (NECO) der mindestens einen Komponente (COMP1, COMP2, COMP3) und/oder
- einer Whitelist für zulässige Konfigurationsdaten (NECO) der mindestens einen Komponente (COMP1, COMP2, COMP3) und/oder
- einer Blacklist für unzulässige Konfigurationsdaten (NECO) der mindestens einen Komponente (COMP1, COMP2, COMP3) und/oder
- mindestens einer kryptographischen Signatur erfolgt.

7. Automatisierungsanlage, ausgebildet zur Ausführung eines Verfahrens nach einem der vorhergehenden Ansprüche, umfassend mindestens eine Komponente (COMP1, COMP2, COMP3) mit einem Speicher mit Konfigurationsdaten (NECO) und einen, von der mindestens eine Komponente (COMP1, COMP2, COMP3) verschiedenen, Prüfserver (CHESER), mittels welchem die Prüfdaten (NECO) der mindestens eine Komponente (COMP1, COMP2, COMP3) prüfbar sind.

8. Automatisierungsanlage nach einem der vorhergehenden Ansprüche, umfassend zusätzlich Erfassungsmittel, welche zur Erfassung mindestens eines Betriebsmodus der Automatisierungsanlage (MAN) eingerichtet sind und welche mit dem Prüfserver (CHESER) signalverbunden sind.

9. Automatisierungsanlage nach einem der vorhergehenden Ansprüche, bei welcher der Prüfserver (CHESER) zur Prüfung (CHAPP) der Konfiguration der mindestens eine Komponente (COMP1, COMP2, COMP3) heranziehend Signale der Erfassungsmittel ausgebildet und eingerichtet ist.

10. Automatisierungsanlage nach einem der vorhergehenden Ansprüche, bei welcher der Prüfserver (CHESER) als Softwaremodul ausgebildet ist.

11. Automatisierungsanlage nach einem der vorhergehenden Ansprüche, bei welcher der Prüfserver (CHESER) als separates Gerät ausgebildet ist.

12. Automatisierungsanlage nach einem der vorhergehenden Ansprüche, welche zusätzlich zur mindestens eine Komponente (COMP1, COMP2, COMP3) mindestens eine zweite oder mehrere Komponenten (COMP2, COMP3) mit je einem Speicher mit Konfigurationsdaten (NECO) aufweist und bei welcher der mindestens eine Prüfserver (CHESER) zur Prüfung der Konfigurationsdaten (NECO) der zweiten oder der mehreren Komponenten (COMP2, COMP3) ausgebildet ist.

13. Automatisierungsanlage nach einem der vorhergehenden Ansprüche, welche eine Fertigungsanlage (MAN) ist.
